# EUROPEAN PATENT APPLICATION

(11) **EP 4 282 613 A1**
(43) Date of publication of application: **29.11.2023**
(21) Application number: 21922814.5
(22) Date of filing: 27.01.2021
(51) Int. Cl.: B29C 44/00, B29C 44/34

(54) **RESIN FORMED PRODUCT**

(71) Applicant: Resonac Corporation, Tokyo 105-8518 (JP)
(72) Inventor: SHIOKAWA, Hirofumi, Tagawa-shi, Fukuoka 825-0005 (JP)
(74) Representative: Hoffmann Eitle
(86) International application number: PCT/JP2021/002855
(87) International publication number: WO 2022/162790

(57) **Abstract**

A resin molded product includes a main body including a design face and a opposite face opposite to the design face and having a first foamed layer formed inside the main body, and a protruding portion located at a periphery of the main body, having a second foamed layer formed inside the protruding portion, and protruding to a thickness direction of the main body and a side opposite to the design face, the protruding portion includes a tip end portion disposed so that a protruding tip portion on the design face extends to a protruding direction of the protruding portion more than a protruding tip portion on the opposite face, and a thickness of the tip end portion is 1.2 mm or less.

## Description

### Technical Field

The present invention relates to a resin molded product.

### Background Art

Because resin structures are lighter than structures made of a metal, they are widely used as structural parts for vehicles, parts mounted on vehicles, housings for electronic devices, or the like. Among resin structures, resin molded products are particularly lightweight, and if used for parts for vehicle such as automobiles, improvement in fuel efficiency is expected.

For example, the method described in Patent Document 1 is known as an injection foam molding method for resin molded products used as interior base materials for automobiles. In Patent Document 1, after injecting a molten resin into a cavity of a mold formed by a movable mold and a fixed mold, foaming is performed with the movable mold slightly opened (core-backed) to obtain the resin molded product.

### Citation List

### Patent Document

[Patent Document 1] Japanese Patent Application Laid-Open (JP-A) No. 2005-238726

### SUMMARY OF INVENTION

### Technical Problem

When a molten resin is injected into a cavity, a portion in contact with a mold is cooled and solidified to form a film-like skin layer. In this state, when the movable mold is core-backed with respect to the fixed mold to expand the volume of the cavity, the molten resin covered with the skin layer foams to form a foamed layer, and a resin molded product is manufactured.

When a resin molded product having a main body and a protruding portion located at a periphery of the main body and protruding to a thickness direction of the main body is formed by foam molding, the molten resin in the protruding portion also foams by the core back to form a foamed layer. At this time, due to foaming of the molten resin at a tip of the protrusion portion, an intended shape cannot be reproduced, and it becomes difficult to ensure the dimensional accuracy of the tip side of the protrusion portion in the resin molded product. As a result, it may become difficult to ensure the accuracy of the alignment gap between the resin molded product and a counterpart component.

The present disclosure has been made in view of the above-described conventional circumstances, and the object is to provide a resin molded product in which foaming at a tip of a protruding portion is reduced.

### Solution to Problem

The specific means for achieving the above problems are as follows.
<1> A resin molded product comprising:
   a main body comprising a design face and a opposite face opposite to the design face and having a first foamed layer formed inside the main body, and
   a protruding portion located at a periphery of the main body, having a second foamed layer formed inside the protruding portion, and protruding to a thickness direction of the main body and a side opposite to the design face,
   wherein the protruding portion comprises a tip end portion disposed so that a protruding tip portion on the design face extends to a protruding direction of the protruding portion more than a protruding tip portion on the opposite face,
   wherein a thickness of the tip end portion is 1.2 mm or less.
<2> The resin molded product according to <1>, wherein an inside of the tip end portion is not foamed.
<3> The resin molded product according to <1> or <2>, wherein the first foamed layer is covered with a pair of first skin layers covering both sides of the first foamed layer, and a thickness A1 of the first foamed layer is thicker than a total thickness B1 of the pair of first skin layers.
<4> The resin molded product according to any one of <1> to <3>, wherein the protruding portion is covered with a pair of second layers covering both sides of the second foamed layer, and a thickness A2 of the second foamed layer is thinner than a total thickness B2 of the pair of second skin layers covering the both sides of the second foamed layer.

### Advantageous Effects of Invention

According to the present disclosure, a resin molded product in which foaming at a tip of a protruding portion is reduced can be provided.

### BRIEF DESCRIPTION OF DRAWINGS

FIG. 1 is a rear view of a resin molded product according to an embodiment of the present disclosure.
FIG. 2 is a vertical end view (2-2 line end view in FIG. 1) of the resin molded product of FIG. 1.
FIG. 3 is an enlarged view of a portion indicated by an arrow 3 in FIG. 2.
FIG. 4 is a schematic cross-sectional view of a mold used for manufacturing a resin molded product of the present disclosure.
FIG. 5 is an enlarged view of a portion indicated by an arrow 5 in FIG. 4
FIG. 6 is an enlarged schematic cross-sectional view of a mold used for manufacturing a resin molded product for comparison.
FIG. 7 is an enlarged schematic cross-sectional view of a mold used for manufacturing a resin molded product for comparison after core-backing.
FIG. 8 is a drawing of a molded product of Example 1 when a cross section of the tip end portion is observed with a microscope.
FIG. 9 is a diagram of a molded product of Comparative Example 1 when a cross section of the tip end portion is observed with a microscope.

### DESCRIPTION OF EMBODIMENTS

Hereinafter embodiments for carrying out the present disclosure will be described in detail. However, the present disclosure is not limited to the following embodiments. In the following embodiments, components (including elemental steps, etc.) thereof are not essential unless otherwise specified. The same applies to numerical values and ranges, which do not limit the present disclosure.

In the present disclosure, the term "step" not only includes a step that is independent of other steps, but also includes a step in a case in which the step cannot be clearly distinguished from other steps as long as the purpose of the step is achieved.

In the present disclosure, a numerical range described using "to" indicates a range including the numerical values before and after "to" as a minimum value and a maximum value, respectively.

In numerical ranges described herein in a stepwise manner, an upper limit value or a lower limit value described in one numerical range may be replaced with an upper limit value or a lower limit value of another numerical range described in a stepwise manner. In addition, in a numerical range described herein, the upper limit value or the lower limit value of the numerical range may be replaced with a value described in the Examples section.

In the present disclosure, each component may contain multiple types of corresponding substances.

In the present disclosure, the term "layer" or "film" refers to, when observing the region where the layer or film is present, not only the case where it is formed over the entire region, but also the case where it is formed only in part of the region.

### [Resin molded product]

A resin molded product of the present disclosure includes a main body including a design face and a opposite face opposite to the design face and having a first foamed layer formed inside the main body, and a protruding portion located at a periphery of the main body, having a second foamed layer formed inside the protruding portion, and protruding to a thickness direction of the main body and a side opposite to the design face, the protruding portion includes a tip end portion disposed so that a protruding tip portion on the design face extends to a protruding direction of the protruding portion more than a protruding tip portion on the opposite face, and a thickness of the tip end portion is 1.2 mm or less.

The resin molded product of the present disclosure includes the aforementioned tip end portion in the protruding tip portion on the design face, and the thickness of the tip end portion is 1.2 mm or less. As a result, foaming at the tip of the protruding portion is reduced, and the intended shape of the resin molded product can be easily reproduced. Since it is possible to ensure the dimensional accuracy of the tip side of the protruding portion, it becomes easy to ensure the accuracy of the alignment gap between the resin molded product and a counterpart component. Furthermore, since foaming at the tip of the protruding portion is reduced, the tip end portion is excellent in strength.

The resin molded product of the present disclosure can be used, for example, as an automotive part. However, uses of the resin molded product is not limited to the automobile part.

In the resin molded product of the present disclosure, it is preferable that the inside of the tip end portion is not foamed. As a result, the dimensional accuracy of the tip side of the protruding portion and the strength of the tip end portion are more excellent.

One embodiment of the resin molded product of the present disclosure and a method of manufacturing the same will be described. The resin molded product of the present disclosure and the method of manufacturing the same are not limited to the following embodiments.

A specific example of the resin molded product and the method of manufacturing the same will be described with reference to drawings, but the present disclosure is not limited to these. Further, the size of each portion in each drawing is conceptual, and the relative relationship between the sizes of portions is not limited to this.

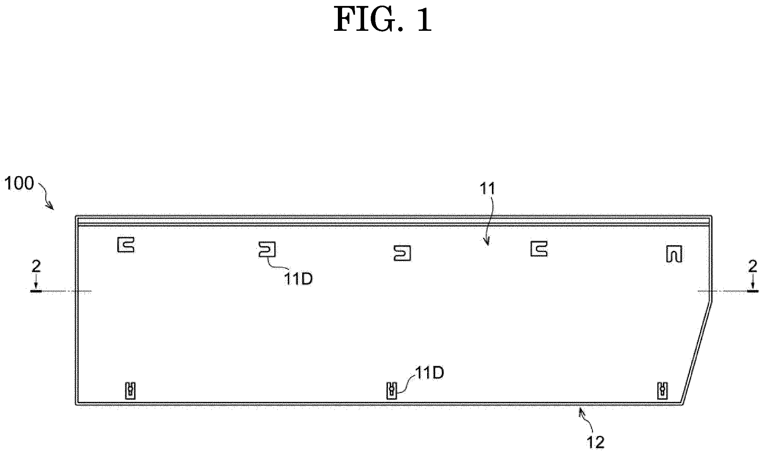

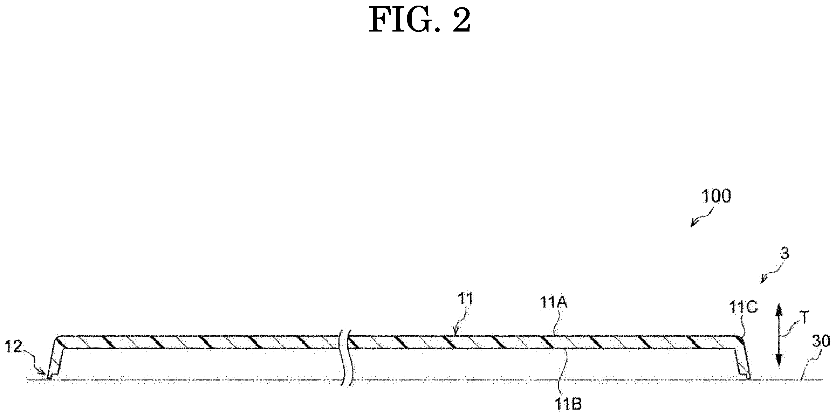

A resin molded product 100 of the embodiment shown in FIG. 1 is an automobile part, and is attached to a vehicle body 30 (see FIG. 2). Examples of the automobile part include automobile interior parts such as console boxes, door trims, deck side trims, back door trims, and instrument panels, and automobile exterior parts such as arch moldings, locker moldings, and sacco moldings.

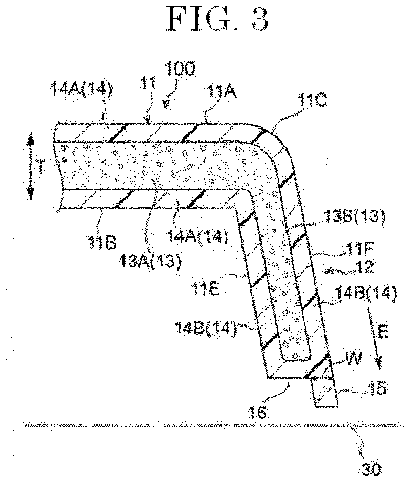

As shown in FIG. 2, the resin molded product 100 is made of a resin material, and includes a main body 11 including a design face 11A and an opposite face 11B, and a protruding portion 12 provided at a periphery 11C (see Fig. 3) of the main body 11, and protruding to a thickness direction (direction shown by arrow T in Fig. 2) of the main body 11 and a side opposite to the design face 11A.

The main body 11 is plate-shaped and has a plurality of vehicle body mounting parts 11D on the opposite face 11B. The vehicle body mounting portion 11D is a portion for mounting the resin molded product 100 to the vehicle body 30 using a mounting member not shown in the drawings.

As shown in FIG. 3, a first foamed layer 13A is formed inside the main body 11. Specifically, the main body 11 includes a pair of first skin layers 14A forming a design face 11A on the front side and an opposite face 11B on the back side, and a first foamed layer 13A formed between the pair of first skin layers 14A. The first foamed layer 13A is covered with a pair of first skin layers 14A.

As shown in FIG. 1 and FIG. 2, the protruding portion 12 is plate-shaped and provided over the entire periphery 11C of the main body 11. That is, the protruding portion 12 is provided along the periphery 11C of the main body 11 for one round. The present disclosure is not limited to the above configuration, and the protruding portion 12 may be configured to be intermittently provided along the periphery 11C of the main body 11, and may be a part of the periphery 11C of the main body 11.

Further, as shown in FIG. 2, in the present disclosure, the protruding portion 12 is present at a terminal end of the main body 11 when a cross section of the main body 11 is observed.

As shown in FIG. 2, the protruding direction (direction shown by arrow E in Fig. 3) of protruding portion 12 is inclined from the periphery 11C of the main body 11 toward the outside, with respect to the thickness direction of the main body 11.

At the tip of the protruding portion 12 in the protruding direction, a tip end portion 15 is provided along a face (front face 11F) that continues from the design face 11A of the main body 11 in the protruding portion 12. A notch 16 is provided on the opposite side of the front face 11F in the tip end portion 15. A thickness W of the tip end portion 15 is thinner than that of the protruding portion 12 and is 1.2 mm or less.

The thickness W of the tip end portion 15 is preferably from 0.5 mm to 1.2 mm, and more preferably from 0.8 mm to 1.2 mm from the viewpoint of suitably ensuring the dimensional accuracy of the tip side of the protruding portion 12 and ensuring the strength of the tip end portion 15.

The thickness W of the tip end portion 15 means the thickness of the root portion of the tip end portion 15 as shown in FIG. 3.

A thickness of tip end portion 15/thickness of protruding portion 12, which is a ratio of the thickness of the tip end portion 15 with respect to the thickness of the protruding portion 12 in the root portion of the tip end portion 15, is preferably from 0.15 to 0.6 and more preferably from 0.3 to 0.6 from the viewpoint of suitably ensuring the dimensional accuracy of the tip side of the protruding portion 12 and ensuring the strength of the tip end portion 15.

A length of the tip end portion 15 may be, for example, 0.5 mm or more, or may be from 0.5 mm to 3 mm. When the length of the tip end portion 15 is 0.5 mm or more, a hardness of the molded product tends to be excellent. When the length of the tip end portion 15 is 3.0 mm or less, it tends to be possible to suitably reduce foaming inside the tip end portion 15, and it tends to be easy to ensure design of the tip end portion 15.

The length of the tip end portion 15 means the distance from the root portion of the tip end portion 15 to the tip portion of the tip end portion 15.

Since the tip end portion 15 is provided at the tip of the protruding portion 12 in the protruding direction, the dimensional accuracy of the tip side of the protruding portion 12 is excellent, and when the resin molded product 100 is attached to the vehicle body 30, an occurrence of a gap between the resin molded product 100 and the vehicle body 30 can be reduced.

A second foamed layer 13B is formed inside the protruding portion 12. Specifically, the protruding portion 12 has a pair of second skin layers 14B and a second foamed layer 13B formed between the pair of second skin layers 14B. As shown in FIG. 3, the first foamed layer 13A and the second foamed layer 13B may or may not be connected.

Hereinafter, the first foamed layer 13A and the second foamed layer 13B are collectively referred to as the "foamed layer 13", and the first skin layer 14A and the second skin layer 14B are collectively referred to as the "skin layer 14". The skin layer 14 is a layer forming each of the front face and the back face of the resin molded product 100 and the foamed layer 13 is a layer forming the inside of the resin molded product 100. The skin layer 14 refers to a portion having a foaming rate lower than that of the foamed layer 13 in the resin molded product 100.

The resin material forming the resin molded product 100 will be described later.

The resin molded product 100 can be manufactured, for example, by foam molding using a mold. It is preferable that the mold includes a fixed mold and a movable mold that is movable in an opening/closing direction with respect to the fixed mold and that forms a cavity being a gap formed with the fixed mold.

The mold is used for foam molding and is suitably used for injection foam molding. Hereinafter, injection foam molding will be described as an example.

A specific example of the mold used in this embodiment will be described with reference to the drawings, but the present disclosure is not limited to these.

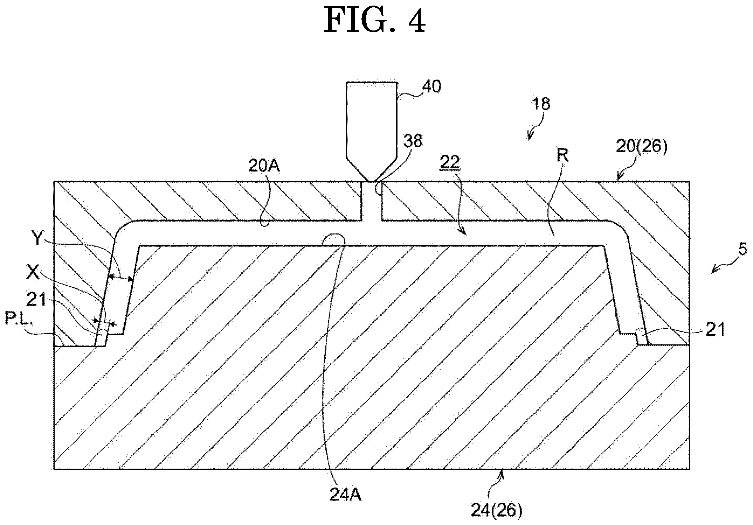

As shown in FIG. 4, a molding device 18A includes a fixed mold 20 and a movable mold 24 that is movable to the fixed mold 20 in the opening/closing direction and that forms a cavity 22 being a gap formed with the fixed mold 20. Hereinafter, the fixed mold 20 and the movable mold 24 may be collectively referred to as "mold 26".

The cavity 22 corresponds to a shape of the resin molded product 100. A parting line (P.L.), which is a seam between the fixed mold 20 and the movable mold 24, is located at a position corresponding to the tip of the protruding portion 15 provided at the tip of the protruding portion 12 in the cavity 22.

The cavity face 20A formed in the fixed mold 20 forms a design face 11A of the main body 11 and a front face 11F of the protruding portion 12 in the resin molded product 100. Further, the cavity face 24A of the movable mold 24 forms an opposite face 11B of the main body 11, the back face 11E of the protruding portion 12, and a face of a notch 16 in the resin molded product 100. The cavity 22 is a gap between the cavity face 20A and the cavity face 24A when the fixed mold 20 and the movable mold 24 are closed.

The front face 11F of the protruding portion 12 may be a design face continuous from the design face 11A, or may not be the design face. Further, the back face 11E of the protruding portion 12 may not be a design face.

The portion of the cavity face 24A that is continuous with the parting line (P.L.) has a step, and a width (X in FIG. 4) of the cavity 22 at the portion that is continuous with the parting line (P.L.) of the cavity face 24A is smaller than a width (Y in FIG. 4) of the cavity 22 in the direction crossing the parting line (P.L.). As a result, a region 21 is formed which is adjacent to the P.L. and has a width smaller than the width of the cavity in the direction crossing the P.L.. The region 21 corresponds to the shape of the tip end portion 15, the width X corresponds to the thickness of the tip end portion 15, and the width Y corresponds to the thickness of the protruding portion 12.

The molding device 18A includes a gate 38 that passes through the fixed mold 20 to the cavity 22, and an injection machine 40 that injects and fills the cavity 22 with a molten resin material R through the gate 38. The injection machine 40 includes a hopper (supply unit) not shown in the drawings and a cylinder not shown in the drawings. In the injection machine 40, a mixture containing a resin, a foaming agent, an additive, or the like is supplied from the hopper (supply unit) to the cylinder, stirred by a screw or the like in the cylinder, and prepared as a resin material R, and the resin material R is injected and filled into the cavity 22 through the gate 38 at a predetermined pressure. The injection machine 40 is not limited to the above configuration as long as it can inject and fill the molten resin material R into the cavity 22 through the gate 38.

### (Method of manufacturing resin molded product)

A method of manufacturing a resin molded product for manufacturing the resin molded product of the present embodiment includes a step of injecting a resin material containing a foaming agent into a cavity of a mold used in the above-described present embodiment and a step of expanding a volume in the cavity by moving a movable mold in an opening direction from a fixed mold that constitutes the mold after the inside of the cavity is filled with the material.

As shown in FIG. 4, a resin material R containing a foaming agent is injected and filled into the cavity 22 from the injection machine 40 through the gate 38. When the resin material R is made of a thermoplastic resin, the resin material R is heated and fluidized to supply it into the cavity 22.

The resin material used in the method of manufacturing the resin molded product is not particularly limited. For example, the resin material used for injection foam molding generally contain a resin and a foaming agent. The resin used for the resin material R includes at least one selected from the group consisting of a polyethylene-based resin, a polypropylene-based resin (PP), a composite polypropylene-based resin (PPC), a polystyrene-based resin, a polyethylene terephthalate-based resin, a polyvinyl an alcohol-based resin, a vinyl chloride-based resin, an ionomer-based resin, polyamide-based resins, an acrylonitrile-butadiene-styrene copolymer-based resin (ABS), and a polycarbonate-based resin. Among these, it is preferable that the resin is at least one selected from the group consisting of a polypropylene-based resin (PP), a composite polypropylene-based resin (PPC) and an acrylonitrile-butadiene-styrene copolymer-based resin (ABS).

Examples of the foaming agent include organic foaming agents such as azodicarbonamide, and inorganic foaming agents such as sodium hydrogen carbonate (also known as sodium bicarbonate, baking soda). Currently, inorganic sodium hydrogen carbonate is mainly used as a foaming agent in foam molding of automobile interior parts, and organic foaming agents are preferable from the viewpoint of improving coating film performance (hot water resistance, or the like).

Examples of the organic foaming agents include azodicarbonamide (ADCA), N,N-dinitrosopentamethylenetetramine (DPT), 4,4-oxybisbenzenesulfonylhydrazide (OBSH), and hydrazodicarbonamide (HDCA), and azodicarbonamide (ADCA) is preferable.

The temperature of the mold 26 is usually lower than that of the supplied resin material R. Therefore, by filling the inside of the cavity 22 with the resin material R, solidification of the resin material R (formation of the skin layer 14) starts from a portion in contact with the mold.

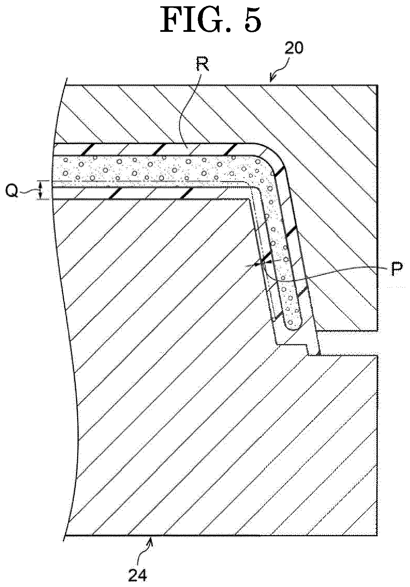

Next, as shown in FIG. 5, the movable mold 24 is opened (core-backed) by a predetermined amount in the opening direction (mold opening direction) to the fixed mold 20, and the unsolidified resin material R is foamed to form the foamed layer 13. In FIG. 5, the position of the movable mold 24 before core-back is indicated by a chain double-dashed line. Q in FIG. 5 means the amount of movement of the movable mold 24 with respect to the fixed mold 20, and P in FIG. 5 means the distance, which is in the direction perpendicular to the cavity face 24A, between the position of the movable mold before core-back and the position of the movable mold after core-back.

As shown in FIG. 5, when the movable mold 24 is core-backed to the fixed mold 20 in the opening direction, the amount of expansion of the main body 11 is approximately equal to the amount Q of movement of the movable mold 24. On the other hand, the amount of expansion of the protruding portion 12 is approximately equal to the distance P shown in FIG. 5. As shown in FIG. 5, the distance P is small compared to the amount Q of movement. Therefore, the thickness of the foamed layer 13A in the main body 11 is thicker than the thickness of the foamed layer 13B in the protruding portion 12.

A length of the tip end portion 15 is preferably equal to or greater than the core back amount, that is, the amount of movement Q. As a result, even if the notch 16 is foamed, deformation of the face of the notch 16 due to foaming is not visible from the design surface 11A side, and the resin molded product 100 is excellent in design.

Next, the movable mold 24 is opened. The resin molded product 100 is obtained by removing the resin molded product 100 from the fixed mold 20.

A thickness A1 of the first foamed layer 13A in the resin molded product 100 is preferably thicker than a total thickness B1 of the pair of first skin layers 14A covering both sides of the first foamed layer 13A. When the thickness A1 of the first foamed layer 13A is thicker than the total thickness B1 of the pair of first skin layers 14A, the strength of the resin molded product 100 tends to be higher. A ratio (A1B1) between the thickness A1 of the first foamed layer 13A and the total thickness B1 of the pair of first skin layers 14A is preferably from 1.3 to 3.2, and more preferably from 1.3 to 2.3.

A thickness A2 of the second foamed layer 13B in the resin molded product 100 is preferably thinner than a total thickness B2 of the pair of second skin layers 14B covering both side of the second foamed layer 13B. When the thickness A2 of the second foamed layer 13B is smaller than the total thickness B2 of the pair of second skin layers 14B, deformation of the end of the protruding portion 12 tends to be further reduced. A ratio (A2/B2) between the thickness A2 of the second foamed layer 13B and the total thickness B2 of the pair of second skin layers 14B is preferably from 0.6 to 0.9.

In the present disclosure, "thickness of layer" such as the foamed layer, or the skin layer is an arithmetic average value of the measured values obtained by measuring the thickness at 9 points using a microscope in a cross-sectional cut shape.

### <Resin molded product for comparison>

Hereinafter, a resin molded product for comparison and a method of manufacturing the same will be described with reference to the drawings. The resin molded product for comparison differs from the resin molded product 100 of the present embodiment in that it does not have a tip end portion. In the following, regarding a method of manufacturing the resin molded product for comparison, the differences from the present embodiment will be described.

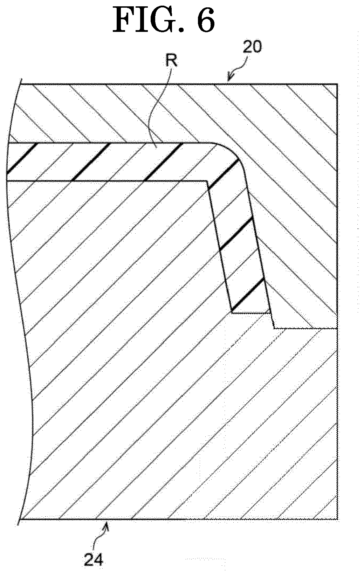

As shown in FIG. 6, a resin material R containing a foaming agent is injected into the cavity. A region corresponding to the shape of the tip end portion is not formed in the cavity.

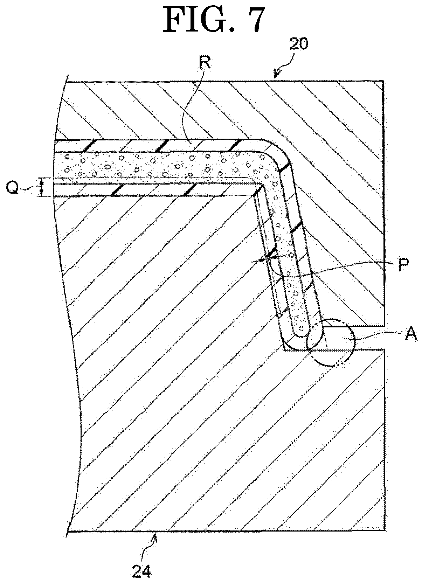

Next, as shown in FIG. 7, the movable mold 24 is opened (core-backed) by a predetermined amount in the opening direction (mold opening direction) to the fixed mold 20, and the unsolidified resin material R is foamed to form a foamed layer.

In the manufacturing method of the resin molded product for comparison, a tip portion of the protruding portion is foamed, so that the tip portion is rounded (for example, see the region surrounded by the dotted line A in FIG. 7), and there is a problem that the tip portion does not form to an intended shape (for example, the tip portion is not rounded and squared). As a result, the resin molded product for comparison has inferior dimensional accuracy on the tip side of the protruding portion.

On the other hand, in the resin molded product of the present disclosure, foaming at the tip of the protruding portion is reduced, and an intended shape can be easily reproduced. Furthermore, it is possible to ensure the dimensional accuracy of the tip side of the protruding portion.

It should be noted that the present disclosure is not limited to the specific configuration of the embodiment as described above, and various modifications can be made without departing from the gist of the present disclosure.

### <Example 1 and Comparative Example 1>

### (Material preparation)

In Example 1 and Comparative Example 1, a material was prepared by mixing 100 parts by mass of a composite polypropylene resin (PPC), 2 parts by mass of a black pigment masterbatch, and a predetermined amount of azodicarbonamide (ADCA) as a foaming agent.

### (Formation of molded product)

An electric injection molding machine with a core back function, equipped with a mold having a region (region 21 in FIG. 4) corresponding to the thickness of the tip end portion of Example 1 or Comparative Example 1 shown in Table 1 was used to obtain a molded product by core-backing a movable mold after injecting the above material.

### (Evaluation of tip end portion)

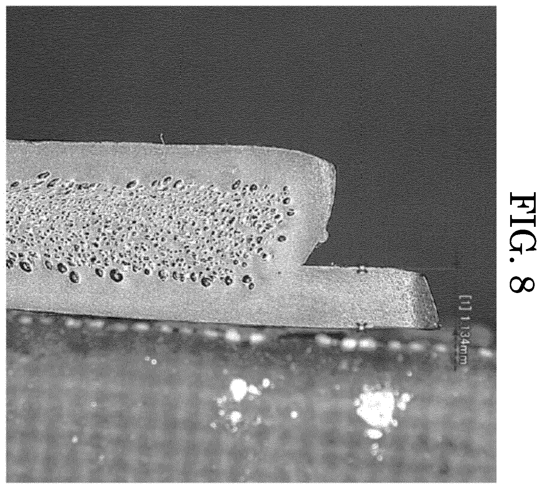

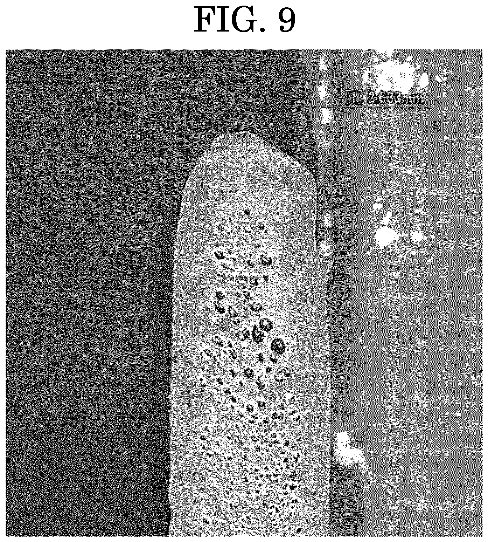

For the molded products of Example 1 and Comparative Example 1, a cross section of each tip end portion was observed with a microscope. The observation results are shown in FIG. 8 and FIG. 9, and the evaluation results are shown in Table 1. In FIG. 8 and FIG. 9, the upper side in the vertical direction corresponds to the core-back direction, and the right side as viewed from the front face corresponds to the protruding portion on the design face side.

**[Table 1]**

| | Example 1 | Comparative Example 1 |
|---|---|---|
| Thickness of tip end portion | 1.13mm | 2.63mm |
| Evaluation of tip end portion | Tip portion was not rounded and intended solid shape could be formed. Dimensional accuracy on tip side of protruding portion was excellent. | Tip portion was rounded by foaming and intended solid shape could not be formed. |

In Example 1, the tip portion on the design face side was not rounded, and the intended solid shape could be formed with high dimensional accuracy.

All the documents, patent applications and technical standards that are described in the present specification are hereby incorporated by reference to the same extent as if each individual document, patent application or technical standard is concretely and individually described to be incorporated by reference.

### [Description of symbols]

100 Resin molded products
11 Main body
12 Protruding portion
13 Foamed layer
14 Skin layer
15 Tip end portion
16 Notch
18A Molding device
19 Root portion
20 Fixed mold
21 Region
22 Cavity
24 Movable mold
26 Mold
30 Vehicle body
38 Gate
40 Injection machine

## Claims

1. A resin molded product comprising:
a main body comprising a design face and a opposite face opposite to the design face and having a first foamed layer formed inside the main body, and
a protruding portion located at a periphery of the main body, having a second foamed layer formed inside the protruding portion, and protruding to a thickness direction of the main body and a side opposite to the design face,
wherein the protruding portion comprises a tip end portion disposed so that a protruding tip portion on the design face extends to a protruding direction of the protruding portion more than a protruding tip portion on the opposite face,
wherein a thickness of the tip end portion is 1.2 mm or less.

2. The resin molded product according to claim 1, wherein an inside of the tip end portion is not foamed.

3. The resin molded product according to claim 1 or 2, wherein the first foamed layer is covered with a pair of first skin layers covering both sides of the first foamed layer, and a thickness A1 of the first foamed layer is thicker than a total thickness B1 of the pair of first skin layers.

4. The resin molded product according to any one of claims 1 to 3, wherein the protruding portion is covered with a pair of second layers covering both sides of the second foamed layer, and a thickness A2 of the second foamed layer is thinner than a total thickness B2 of the pair of second skin layers covering the both sides of the second foamed layer.
